# EUROPÄISCHE PATENTSCHRIFT

(11) **EP 1 862 976 B1**
(45) Veröffentlichungstag und Bekanntmachung des Hinweises auf die Patenterteilung: **01.01.2014**
(21) Anmeldenummer: 07090104.6
(22) Anmeldetag: 24.05.2007
(51) Int. Cl.: G07B 17/00, G09F 3/03, C09J 5/02, C09J 11/02, B41M 3/14, B43M 5/00

(54) **Verwendung einer Schliessflüssigkeit für Sicherheitsschliessungen**
Use of a moistening sealing fluid for safety locking devices
Utilisation d'un liquide de fermeture pour fermetures de sécurité

(30) Priorität: 29.05.2006 DE 102006025200
(43) Veröffentlichungstag der Anmeldung: 05.12.2007
(73) Patentinhaber: Francotyp-Postalia GmbH, 16547 Birkenwerder (DE)
(72) Erfinder: Gerhardt, Thomas, 12277 Berlin (DE); Muhl, Wolfgang, 16547 Hohen Neuendorf (DE)
(74) Vertreter: Jungblut, Bernhard Jakob

(56) Entgegenhaltungen:
- EP-A- 1 113 403
- EP-A- 1 616 716
- EP-A- 1 630 748
- WO-A-2006/065544
- KR-A- 20030 043 356
- US-A- 1 969 636
- US-A- 3 282 852
- US-A- 4 702 774
- US-A- 5 022 953
- US-A- 5 267 754
- US-A- 6 039 257
- US-A1- 2004 001 133
- US-A1- 2004 026 664
- US-A1- 2005 230 459

## Beschreibung

### Gebiet der Erfindung.

Die Erfindung betrifft eine Verwendung einer Schließflüssigkeit zum Schließen von Poststücken, enthaltend Wasser, für Sicherheitsschließungen, Briefschließvorrichtungen und Frankiermaschinen enthaltend eine solche Schließflüssigkeit, und ein Verfahren zur Detektion unauthorisierter Öffnung eines Poststückes.

### Hintergrund der Erfindung und Stand der Technik.

Poststücke, insbesondere Briefe, werden bei hohem Aufkommen an zu versendenden Poststücken von einem Versender meist automatisch verschlossen und frankiert. Hierzu werden u.a. Schließvorrichtungen und Frankiermaschinen eingesetzt, wobei beide Komponenten oft mit einander verbunden sind und mitunter bauliche Einheiten bilden. Beispielhaft wird auf die Literaturstelle DE 20 2004 011 390 U1 verwiesen.

Im Zusammenhang mit dem Schließen von Poststücken, deren Verschlusslaschen mit einer Gummierung versehen sind, ist es erforderlich, die Gummierung vor dem Schließen anzufeuchten. Hierzu wird eine Schließflüssigkeit (automatisch) mittels eines Befeuchtungsschwammes auf die Gummierung aufgetragen. Dann wird unmittelbar nach der Befeuchtung die Verschlusslasche umgeschlagen und auf einer der Gummierung gegenüberliegenden Oberfläche des Poststückes angedrückt und so verklebt.

Aus der Praxis sind verschiedene Schließflüssigkeiten bekannt. Diese sind typischerweise Wasser oder wäßrige Lösungen, die einerseits Biozide und Fungizide enthalten können, um die Entstehung von Keimkolonien und unangenehmen Gerüchen zu verhindern. Andererseits kann ein Benetzungsmittel beigegeben sein.

Derart verschlossene Poststücke werden in aller Regel mittels eines Brieföffners oder dergleichen geöffnet, i.e. das Poststück wird im Bereich einer Kante aufgeschlitzt und der Inhalt dann entnommen. Jedoch kann eine Person, die zur Öffnung nicht authorisiert ist, ein solches Poststück beispielsweise dadurch öffnen, dass es gewässert bzw. einer Wasserdampf-haltigen Atmosphäre ausgesetzt wird. Dabei löst sich der Klebstoff der Gummierung in dem sich im Bereich der Klebung niederschlagenden Wasser und die Verschlusslasche kann abgehoben werden. Die unauthorisierte Person kann dann von dem Inhalt des Poststückes Kenntnis nehmen und dann das Poststück mit Inhalt durch Umschlagen und Andrücken der Verschlusslasche wieder verschließen. Bei einigermaßen vorsichtigem Vorgehen ist es einer später das Poststück entgegenehmenden authorisierten Person durch Inaugenscheinnahme nicht ohne weiteres erkenntlich, dass zuvor eine unauthorisierte Öffnung des Poststückes erfolgt war. Dies stört aus offensichtlichen Gründen.

Aus der Literaturstelle DE 4436294 A1 ist eine Schließflüssigkeit bekannt, welche neben der Hauptkomponente Wasser eine zweite Komponente eines Zweikomponentenleimes enthält. Die erste Komponente des Zweikomponentenleimes ist in der Gummierung enthalten.

Aus den Literaturstellen DE 3431239 A1 und DE-G 8716046 sind eine Sicherheitsbriefhülle bzw. ein Sicherheitsetikett bekannt, wobei Kleberbereiche dergestalt angeordnet sind, dass bei (unbefugter) Öffnung eine irreparable Zerstörung des Etiketts bzw. der Briefhülle stattfindet, welche dann ohne weiteres durch Inaugenscheinnahme erkennbar ist.

Aus den Literaturstellen DE-OS 2319866, US 5,022,953 und EP 1616716 sind Kuvertiermaschinen bzw. Befeuchtungseinrichtungen bekannt. Aus den Literaturstellen US 4,702,774, WO 2006/65544 und US 1,969,636 sind Schließflüssigkeiten bekannt. Aus den Literaturstellen US 5,267,754, US 2004/001133, US 6,039,257, US 2004/0026664, US 3,282,852, und KR 2003/0043356 sind Flüssigkeiten mit Sicherheitsadditiven bekannt.

### Technisches Problem der Erfindung.

Der Erfindung liegt das technische Problem zu Grunde, eine Verwendung einer Schließflüssigkeit anzugeben, welche für Sicherheitsschließungen geeignet ist, i.e. eine unauthorisierte Öffnung erkennen läßt.

### Grundzüge der Erfindung und bevorzugte Ausführungsformen.

Zur Lösung dieses technischen Problems lehrt die Erfindung den Gegenstand des Anspruchs 1.

Der Begriff der unmittelbaren Inaugenscheinnahme meint die Betrachtung durch eine Person ohne Zuhilfenahme von technischen Hilfsmitteln. Demgegenüber ist das Sicherheitsadditiv sichtbar-machbar mittels technischer Hilfsmittel und/oder detektierbar mittels technischer Hilfsmittel. Es handelt sich folglich um ein nicht sichtbares Sicherheitsmerkmal.

Die Erfindung beruht auf Vorversuchen mit mittels eines sichtbaren Farbstoffes eingefärbter Schließflüssigkeit und der dabei entstandenen Erkenntnis, dass bei der automatischen Befeuchtung einer Gummierung die Befeuchtung nicht lateral homogen erfolgt, sondern auf Grund der Oberflächenstruktur des Befeuchtungsschwammes ein Muster entsteht. Des Weiteren wurde erkannt, dass ein solches Muster durch Exposition mit Wasserdampf durch Zerfließen bzw. Verwaschen zerstört wird. Hieraus ist die technische Lehre der Erfindung entstanden, eine Schließflüssigkeit zu verwenden, deren laterale Verteilung mit dem menschlichen Auge nicht ohne Weiteres zu erkennen ist, jedoch mit technischen Hilfsmitteln sichtbar gemacht und/oder mit technischen Hilfsmitteln detektiert werden kann. Denn anhand der lateralen Verteilung der Schließflüssigkeit bzw. des Sicherheitsadditivs kann festgestellt werden, ob das Sicherheitsadditiv beispielsweise durch Hitze zerstört und/oder durch Auswaschen verlaufen ist. Wird dies festgestellt, so ist das ein Anzeichen für eine unauthorisierte Öffnung. Entspricht jedoch die festgestellte laterale Verteilung der Schließflüssigkeit bzw. des Sicherheitsadditivs einer vorgegebenen lateralen Referenzverteilung (nämlich eine laterale Verteilung, wie beim Befeuchten erzeugt), so kann eine unauthorisierte Öffnung jedenfalls durch Lösung der Gummierung ausgeschlossen werden.

Die laterale Verteilung der Schließflüssigkeit und somit des Sicherheitsadditivs kann im Rahmen des Verschlusses des Poststückes auf die verschiedensten Weisen eingerichtet werden. Im einfachsten Falle entspricht die laterale Verteilung der Schließflüssigkeit einem Muster, wie es durch Auflegen des Befeuchtungsschwammes auf die Gummierung bzw. das Poststück entsteht. Es ist aber auch möglich, dass der Befeuchtungsschwamm oder andere Mittel zum Aufbringen der Schließflüssigkeit auf die Gummierung bzw. das Poststück so aufgebaut ist, dass die Schließflüssigkeit mit einem vorgegebenem Muster, eindimensional oder zweidimensional, aufgebracht wird. Einfache eindimensionale Muster sind beispielsweise eine Abfolge von Bereichen, in welchen Schließflüssigkeit aufgebracht wird, und Bereichen, in denen keine Schließflüssigkeit aufgebracht wird. Die Abfolge erstreckt sich dann zweckmäßigerweise in Richtung der Längserstreckung der Gummierung. Dies läßt sich beispielsweise mittels einer Befeuchtungsrolle realisieren, welche ähnlich einem Stempel Bereiche aufweist, die nicht mit der Gummierung bzw. dem Poststück in Berührung kommen. Wird eine solche Rolle mit in Umfangsrichtung aneinander anschließenden Vertiefungen und Erhöhungen angefeuchtet und über die Gummierung gerollt, so entsteht in Richtung der Längserstreckung der Gummierung ein eindimensionales Muster. Entsprechend kann auch ein zweidimensionales Muster geschaffen werden, wobei dann die Mittel zum Aufbringen der Schließflüssigkeit entsprechende Vertiefungen und Erhöhungen in verschiedene Richtungen aufweisen. Zweidimensionale Muster können einfach sein, beispielsweise ein Schachbrettmuster, oder auch komplizierte Darstellungen bilden. In letzterem Falle wird ein Ergebnis ähnlich einem Wasserzeichen erhalten.

Erfindungsgemäß ist das Sicherheitsadditiv ausgewählt ist aus der Gruppe bestehend aus "Lumineszenzstoffe, Peptide, Proteine, Nukleinsäuren, vorzugsweise mit 2 bis 50 Nukleotiden, von anderen Komponenten der Schließflüssigkeit verschiedene niedermolekulare anorganische oder organische Substanzen".

Ein Lumineszenzstoff enthält Atome, Moleküle oder Partikel, die zur Lumineszenz befähigt sind. Der Begriff der Lumineszenz bezeichnet die Emission von elektromagnetischer Strahlung, insbesondere im IR-, Sichtbaren oder UV-Bereich im Verlauf einer Relaxation eines atomaren oder molekularen elektronischen Systems aus einem angeregten Zustand in einen Grundzustand. Hierbei kann die vorherige Anregung durch elektrische Energie bzw. ein elektrisches Potential (Elektrolumineszenz), Beschuss mit Elektronen (Kathodolumineszenz), Beschuss mit Photonen (Photolumineszenz), Wärmeeinwirkung (Thermolumineszenz) oder Reibung (Tribolumineszenz) erfolgen. Die Lumineszenz umfasst insbesondere die Phosphoreszenz sowie die (Photo-) Fluoreszenz. Die Fluoreszenz ist eine strahlende Deaktivierung von angeregten Zuständen, wobei der Übergang vom angeregten Zustand in den Grundzustand spinerlaubt ist. Die Verweildauer im angeregten Zustand beträgt typischerweise ca. 10^-8 s, i.e. die Emission der Fluoreszenzstrahlung endet unmittelbar nach dem Ende des Energieeintrages zur Anregung. Die Phosphoreszenz ist dagegen eine spinverbotene Deaktivierung von angeregten Zuständen über Interkombinationsprozesse. Daher ist die Relaxation schwach und langsam. Die Verweildauer in einem angeregten Zustand beträgt einige Millisekunden bis zu Stunden und entsprechend lange ist die Emission der Phosphoreszenzstrahlung zu beobachten. Die Emissionswellenlänge eines Lumineszenzstoffes ist für den verwendeten Farbstoff charakteristisch und bestimmt durch die Energiedifferenz zwischen angeregtem Zustand und Grundzustand. Als Emissionswellenlänge wird dabei das Maximum der Emissionsintensität in einem Emissionspektrum bezeichnet. Vorzugsweise sind die Lumineszenzstoffe Fluoreszenzfarbstoffe. Zu geeigneten Fluoreszenzfarbstoffen wird lediglich beispielsweise auf die Literaturstellen WO 03/052025 A, WO 02/053677 A, EP 0147252 A, GB 2,258,659 und F.M. Winnik et al., Xerox Discloser Journal Vol. 17, No. 3, 1992, Seiten 161-162, verwiesen. Geeignete Fluoreszenzfarbstoffe auf organischer Basis, beispielsweise Naphthalimide, Coumarine, Xanthene, Thioxanthene, Naphtholactame, Azlactone, Methine, Oxazine, oder Thiazine, sind zudem aus der Literatur bekannt, wozu lediglich beispielsweise auf Schwander et al., "Fluorescent Dyes" in Ullmann's Encyclopedia of Industrial Chemistry, Wiley-VCH Verlag GmbH & Co. KGaA, 2002, verwiesen wird. Bezüglich geeigneter fluoreszenzkonjugierte Polymere wird ergänzend auf die Literaturstellen McQuade et al., Chem. Rev. 100:2537-2574 (2000), Yang et al., J. Am. Chem. Soc. 120:11864-11873 (1998), Yang et al., J. Am. Chem. Soc. 120:5321-5322 (1998) und Zhou et al., J. Am. Chem. Soc. 117:12593-12602 (1995) verwiesen. Fluoreszenzfarbstoffe können auch unterschiedlich dotiert sein, beispielsweise mit Europium, wodurch dann unterschiedliche Emissionswellenlängen erhalten werden. Lediglich als Beispiele für geeignete Lumineszenzstoffe seien die Substanzen der Luminex-Produktreihe der Firma AlliedSignal genannt. Erfindungsgemäß eingesetzte Lumineszenzstoffe haben bei Betrachtung unter Tageslicht keine ohne weiteres mit dem menschlichen Auge erkennbare Farbe. Alternativ sind die Lumineszenzstoffe, sofern sie eine Farbe aufweisen, so stark verdünnt, dass die Farbe nicht ohne weiteres erkennbar ist. Der Nachweis eines Lumineszenzstoffes erfolgt durch Anregung mit einer geeigneten Primärstrahlung und Detektion der dabei angeregten Emissionsstrahlung. Eine ortsaufgelöste Detektion ist beispielsweise mittels einer CCD-Kamera und einer geeigneten vorgeschalteten Optik möglich. Es kann ein Linien-CCD-Element eingesetzt werden im Falle eines eindimensionalen Musters, wobei dann die Längserstreckung der Gummierung und die Linie der Sensorelemente optisch in etwa parallel verlaufen sollten. Es kann aber auch für zweidimensionale Muster ein zweidimensionales CCD Array mit geeigneter Optik eingesetzt werden, welches dann eine unmittelbar Abbildung und Darstellung des detektierten Musters ermöglicht.

Grundsätzlich sind Proteine oder Peptide beliebiger Spezies einsetzbar, wobei diese vorzugsweise nicht-toxisch sind. Entsprechendes gilt für die Nukleinsäuren. Im Rahmen einer Schließflüssigkeit sollte vorzugsweise lediglich eine einzige Spezies, i.e. stets gleiche Moleküle, eingesetzt werden. Der Nachweis eines Proteins oder Peptids kann beispielsweise mittels eines für das Peptid oder Protein spezifischen Antikörpers erfolgen. Hierbei wird das Protein oder Peptid erforderlichenfalls zunächst immobilisiert und dann mit den Antikörpern inkubiert. Mittels an einem solchen Antikörper gekoppelter Farbstoffe kann dann ein Muster unmittelbar für das menschliche Auge sichtbar gemacht werden analog der Anfärbung eines Gewebeschnittes in der Biochemie. Es können aber auch Antikörper verwendet werden, an welche Lumineszenzstoffe gekoppelt sind, welche dann durch Bestrahlung beispielsweise mit UV-Licht sichtbar gemacht werden. Im Falle der Nukleinsäuren sind ebenfalls Moleküle beliebiger Spezies einsetzbar. Der Nachweis erfolgt beispielsweise mit üblichen Methoden der Hybridisierung von Detektornukleinsäuren, die für die in der Schließflüssigkeit eingesetzten Nukleinsäuren spezifisch sind, i.e. hiermit unter stringenten Bedingungen hybridisieren, also in der Sequenz zumindest teilweise komplementär sind. Die Detektornukleinsäuren tragen dann entweder Farbstoffe, die ohne weiteres erkennbar sind, es ist aber auch möglich, an die Detektornukleinsäuren gekoppelte Lumineszenzstoffe einzusetzen und in besagter Weise zu detektieren. Der einschlägigen Fachliteratur der Biochemie sind die verschiedenen Verfahrensweise zum ortsaufgelösten Nachweis von Peptiden, Proteinen oder Nukleinsäuren entnehmbar, so dass hierauf verwiesen werden darf.

Niedermolekulare organische bzw. anorganische Substanzen haben ein Molekulargewicht von typischerweise unter 5.000 Da, insbesondere unter 1.000 Da. Insbesondere in Frage kommen Substanzen, die mittels charakteristischer chemischer Reaktionen mit einer Analysensubstanz einfach und ortsaufgelöst nachweisen lassen. Beispiele sind Salze eher seltener Elemente, wie beispielsweise Pd, Pt, Ir, Au oder Ag.

Die Detektion des Sicherheitsadditivs erfolgt bei allen Varianten mit einer zumindest eindimensionalen Ortsauflösung.

Eine erfindungsgemäß verwendete Schließflüssigkeit kann die folgenden Komponenten aufweisen: a) 50 bis 99,9, vorzugsweise 70 bis 99,0, insbesondere 80 bis 99,0, Gew.-% Wasser, b) 0 bis 10,0, vorzugsweise 1,0 bis 30,0, insbesondere 1,0 bis 20, Gew.-% Penetrationsmittel, c) 0 bis 10,0, vorzugsweise 0 bis 3,0, insbesondere 0,01 bis 1,0, Gew.-% Benetzungsmittel, d) 0 bis 10,0, vorzugsweise 0 bis 3,0, insbesondere 0,01 bis 2,0, Gew.-% Stabilisierer und/oder Puffer, e) 0 bis 5,0, vorzugsweise 0 bis 2,0, insbesondere 0,01 bis 1,0, Gew.-% Farbstoffe, f) 0 bis 5,0, vorzugsweise 0 bis 1,0, insbesondere 0,01 bis 0,1, Gew.-% Aromastoffe, g) 0 bis 10,0, vorzugsweise 0 bis 1,0, insbesondere 0 bis 0,1 Gew.-% Biozide und/oder Fungizide und/oder sonstige üblichen Hilfsstoffe, h) 0,0001 bis 10,0, vorzugsweise 0,0001 bis 2,0, insbesondere 0,0001 bis 0,1, Gew.-% des Sicherheitsadditivs, wobei sich die Komponenten a) bis h) stets zu 100 Gew.-% addieren.

Zu den fakultativ vorhandenen Komponenten b) bis g), die stets verschieden von der Komponente h) sind, ist Folgendes auszuführen.

Ein Penetrationsmittel ist eine Substanz, die zu einer gegenüber Wasser verkürzten, insbesondere um zumindest 10%, vorzugsweise zumindest 20%, höchstvorzugsweise zumindest 50%, bezogen auf die Wegschlagzeit von reinem Wasser, verkürzten Wegschlagzeit der Schließflüssigkeit in Papierwerkstoffen führt. Benetzungsmittel und Penetrationsmittel sind im Rahmen der hier verwendeten Terminologie verschieden. Die Wegschlagzeit wird als die Zeit gemessen, in welcher ein auf den Papierwerkstoff aufgebrachter Tropfen der Schließflüssigkeit eines Volumens von 100 pl ± 5 pl in das Papier vollständig eingedrungen ist. Die Messung der Wegschlagzeit, auch als Penetrationszeit bekannt, ist aus der Tintenstrahldrucktechnologie bekannt und hierzu wird lediglich beispielsweise auf die Literaturstelle EP 1072653 A2 verwiesen. Geeignete Penetrationsmittel sind beispielsweise C1-8 Alkylester von C1-8 Mono-, Di-, oder Tricarbonsäuren, wobei die Carbonsäure OH-substituiert, insbesondere in α-Stellung, sein kann. Die Carboxylgruppen können vollständig oder teilweise verestert sein. Andere bevorzugte Penetrationsmittel sind C1-8 Ether von C1-8 Polyolen, wobei zumindest eine OH-Gruppe des Polyols nicht verethert ist. Als Polyole kommen insbesondere Diole oder Triole in Frage, wobei in letzterem Falle 1 oder 2 OH-Gruppen verethert sein können. C1-8 Alkyl kann linear, verzweigt, gesättigt oder ungesät-tigt sein. Als C1-8 Alkyl kommen beispielsweise in Frage Methyl, Ethyl, Propyl, Isopropyl, Butyl, Isobutyl, tert. Butyl, Pentyl usw.. C1-8 Carbonsäuren können linear oder verzweigt, gesättigt oder ungesättigt sein. Als C1-8 Carbonsäuren kommen in Frage Ameisensäure, Essigsäure, Propionsäure, Buttersäure, Valeriansäure, Capronsäure, Isobuttersäure, Isovaleriansäure, Acrylsäure, Crotonsäure usw.. Als Hydroxycarbonsäuren kommen beispielsweise in Frage Glykolsäure, Milchsäure, Mandelsäure, Äpfelsäure, Weinsäure und Citronensäure. Als Diole kommen beispielsweise in Frage 1,2-Ethandiol, 1,3-Propandiol, 1,2-Propandiol, 1,4-Butandiol, 1,3-Butandiol, 1,2-Butandiol, usw.. Das Polyol kann eine oder mehrere Ethergruppen enthalten. Ein Beispiel für ein solches Polyol ist 2,2'-Oxydiethanol (Diethylenglykol). Als geeignete konkrete Verbindungen werden nicht abschließend genannt: Methyllactat, Ethyllactat, Propyllactat, Isopropyllactat, Äpfelsäurediester, Äpfelsäuremonoester, Weinsäurediester, Weinsäuremonoester, Ethylenglycolmonomethylether, Ethylenglycolmonoethylether, Ethylenglycolmonopropylether, Ethylenglycolmonobutylether, Diethylenglycolmonomethylether, Diethylenglycolmonoethylether, Diethylenglycolmonopropylether, Diethylenglycolmonobutylether. Bezüglich weiterer geeigneter Penetrationsmittel wird lediglich beispielhaft auf die Literaturstellen EP 1072653 A und die darin genannten Literaturstellen, sowie die Literaturstellen DE 69628897 T2, US-5,674,314 A verwiesen.

Als Benetzungsmittel sind beispielsweise tensidische Benetzungsmittel geeignet. Das Benetzungsmittel kann ausgewählt sein aus der Gruppe bestehend aus "nichtionische Tenside, amphotere Tenside, anionische Tenside, kathionische Tenside, Ricinoleamidpropyl Betaine". Vorzugsweise handelt es sich um biologisch abbaubare Tenside. Bevorzugt werden amphotere Tenside eingesetzt, da damit überraschenderweise eine besonders gute Benetzung der Gummierung gelingt.

Des weiteren kann eine Schließflüssigkeit einen oder mehrere der folgenden Zusatz- und/oder Hilfsstoffe enthalten: Stabilisierer und/oder Puffer, Farbstoffe, und/oder Aromastoffe. Selbstverständlich können auch Biozide (beispielsweise Parmetol A6 oder Cetyltrimethylammoniumbromid) und/oder Fungizide in üblicher Weise zugesetzt sein. Als Farbstoffe und Aromastoffe kommen vorzugsweise Substanzen mit Zulassung als Lebensmittelzusatzstoffe in Frage, wie Lebensmittelfarben, Citral, Hexylhexonat usw.. Stabilisierer und/oder Puffer stabilisieren Bestandteile der Schließflüssigkeit, die hydrolysiert werden können. Beispielsweise ist NaLactat ein geeigneter Stabilisierer bzw. Puffer für Lactatester. Als Stabilisierer bzw. Puffer kommen insbesondere alle üblichen Stellsalze, wie Na-Lactat, NaCl, KCl usw., in Frage.

Wichtig für das Verständnis der Erfindung ist, dass das Sicherheitsadditiv keine ansonsten übliche Komponente einer Schließflüssigkeit ist, sondern einzig und allein zu Detektionszwecken eingesetzt ist. Ein Sicherheitsadditiv erfüllt keine weitere Funktion im Rahmen einer damit befeuchteten Poststückhülle. Insbesondere ist ein Sicherheitsadditiv nicht funktional entsprechend einer der Komponenten b) bis g) oder als Komponente eines Mehrkomponentenklebers.

Die Erfindung betrifft gemäß Anspruch 1 die Verwendung einer vorstehend beschriebenen Schließflüssigkeit zum Verschließen von Poststücken bzw. ein Verfahren zur Herstellung eines verschlossenen Poststückes, wobei eine mit einer Gummierung versehene Lasche einer das Poststück umhüllenden Poststückhülle oder ein der umgeklappten Lasche gegenüberliegender Bereich des Poststückes mit der Schließflüssigkeit mit definierter lateral inhomogener Verteilung des Sicherheitsadditivs befeuchtet wird, und wobei die Lasche dann umgeklappt und an einer gegenüberliegenden Fläche der Poststückhülle angedrückt wird. Der Begriff der lateral inhomogenen Verteilung bezeichnet hierbei eine ungleichmäßige Verteilung der Schließflüssigkeit bzw. des Sicherheitsadditivs, bezogen auf die Ebene der Gummierung bzw. der gegenüberliegenden Bereich der Poststückhülle. Mit anderen Worten ausgedrückt, die Schließflüssigkeit bzw. das Sicherheitsadditiv wird mit einem Muster aufgebracht. Die Inhomogenität wird im einfachsten Falle dergestalt sein, dass die Schließflüssigkeit in einigen Bereichen aufgebracht, in anderen Bereichen jedoch nicht aufgebracht wird. Es ist aber grundsätzlich auch möglich, dass verschiedene Mengen bzw. Konzentrationen an Sicherheitsadditiv entsprechend dem vorgegebenen Muster ausgebracht werden.

Das Poststück kann insbesondere ein Brief und die Poststückhülle ein Briefumschlag sein. Die Befeuchtung sowie das Umklappen und Andrücken der Lasche erfolgt vorzugsweise in einer Briefschließvorrichtung automatisch gesteuert.

Die Erfindung ist einsetzbar in einer Briefschließvorrichtung mit einem Tank, enthaltend eine Schließflüssigkeit und eine Befeuchterschwinge, welche zur Abnahme von Schließflüssigkeit aus dem Tank und Übertragung abgenommener Schließflüssigkeit auf die Gummierung oder der Gummierung bei umgeklappter Lasche gegenüberliegenden Bereich eines in die Briefschließvorrichtung eingelegten Poststückes mit definierter lateral inhomogener Verteilung der Schließflüssigkeit bzw. des Sicherheitsadditivs eingerichtet ist, wobei die Schließflüssigkeit wie in Anspruch 1 definiert verwendet wird.

Die Erfindung ist weiterhin einsetzbar in einer Frankiervorrichtung mit einer Briefschließvorrichtung wie vorstehend beschrieben.

Gegenstand der Erfindung ist auch ein Poststück mit einer Poststückhülle, welche mit einer mit einer Gummierung versehenen Lasche ausgestattet ist, welches unter Verwendung einer vorstehend beschriebenen Schließflüssigkeit durch Anfeuchten der Gummierung, Umklappen der Lasche und Andrücken der Gummierung an die Poststückhülle verschlossen ist, wobei das Sicherheitsadditiv mit definierter lateral inhomogener Verteilung in Bereich der Gummierung angeordnet ist.

Schließlich betrifft die Erfindung ein Verfahren zur Detektion einer unauthorisierten Öffnung eines solchen Poststückes, wobei die lateral inhomogene Verteilung des Sicherheitsadditivs detektiert und/oder angezeigt und optional automatisch mit einer lateral inhomogenen Referenzverteilung verglichen wird. Bezüglich der Detektion wird auf die vorstehenden Ausführungen im Zusammenhang mit verschiedenen Sicherheitsadditiven verwiesen.

Im Folgenden wird die Erfindung anhand von lediglich Ausführungsformen darstellen Beispielen näher erläutert.

### Beispiel 1: Schließflüssigkeiten

Als Schließflüssigkeiten sind beispielsweise die folgenden käuflich erwerbbaren Produkte einsetzbar: Schließflüssigkeit "FT" der Firma FrancoTech GmbH, Deutschland, "E-Z Seal" der Firma Pitney Bowes, USA, und "Quick Seal"-Zubereitung der Firma Service Industries, USA, in der in Kanada vertriebenen Form.

Des weiteren sind Schließflüssigkeiten einsetzbar, welche wäßrige Lösungen mit einem Penetrationsmittel und Hilfsmittel enthalten. Als Penetrationsmittel sind einsetzbar: EGDA (Ethylenglycoldiactet), DEGMEE (Diethylenglycolmonoethyl-ether), EL (Ethyllactat) und EGMBE (Ethylenglycolmono-butylether. Alle diese Substanzen sind von der Firma Merck, Deutschland, erhältlich. Als Hilfsmittel sind einsetzbar: NaLac (Natriumlactat Lösung 50%, Merck, Deutschland), TMN 6 (Tergitol TMN 6 nichtionisches Tensid, Fluka, Deutschland), AM R 40 (Ricinoleamidepropyl Betaine, amphoteres Tensidmuster, Degussa, Deutschland) und Säurerhodamin BC 01 als Farbstoff (Duasyn Merck).

Einer vorstehenden Schließflüssigkeit wird ein üblicher, käuflich erwerbbarer Fluoreszenzstoff beigemischt, der im Sichtbaren, jedenfalls bei der eingesetzten Konzentration, keine mit dem menschlichen Auge erkennbare Farbe aufweist, jedoch unter Bestrahlung mit einer UV-Lampe rot leuchtet. Die Beimischung erfolgt mit ca. 0,01 Gew.-%.

### Beispiel 2: Aufbringen einer Schließflüssigkeit nach

### Beispiel 1

Die Gummierung eines Briefumschlages wird mittels eines im Rahmen einer Briefschließvorrichtung eingerichteten Befeuchtungsschwammes mit Schließflüssigkeit gemäß Beispiel 1 benetzt. Dabei weist der Befeuchtungsschwamm eine Mehrzahl, beispielsweise 5, quadratische Ausnehmungen einer Größe von 2 x 2 mm auf, die entlang der Längserstreckung des Befeuchtungsschwammes und so entlang der Längserstreckung der zu befeuchtenden Gummierung gleichmäßig in Abständen von 5 mm zwischen den Quadraten aneinandergereiht angeordnet sind. Hierdurch entstehen entsprechende quadratische Bereiche der Gummierung, die nicht benetzt sind. Sodann wird die Lasche umgeschlagen und an den Briefumschlag angedrückt.

### Beispiel 3: Prüfung eines gemäß Beispiel 2 verschlossenen und nicht unauthorisiert göffneten Poststückes.

Der Briefumschlag wird zunächst mittels eines Brieföffners entlang einer Kante aufgeschlitzt. Dann wird die Innenseite des Briefumschlages mit einer UV-Lampe bestrahlt. Im Bereich des Briefumschlages, auf welchen die Lasche mit der Gummierung umgeschlagen worden ist (und noch klebt), erkennt man unter der UV-Bestrahlung eine rot leuchtende Fläche, welche durch etwa quadratische Lücken unterbrochen ist. Dies ist auf der Innenseite ersichtlich, weil die Schließflüssigkeit beim Verschließen von dem Briefumschlag aufgenommen ("weggeschlagen") wird. Hierbei tritt eine nur sehr geringe Verwaschung des Musters in der Ebene der

Gummierung ein. Die Betrachtung zeigt im Ergebnis, dass der Briefumschlag nicht geöffnet wurde. Dies läßt sich auch automatisieren, indem das Muster beispielsweise mittels einer CCD-Kamera registriert und mit einem Sollmuster verglichen wird. Bei positivem Vergleich kann eine Anzeige "O.K" oder dergleichen erfolgen. Bei negativem Vergleich erfolgt ein Warnsignal, optisch und/oder akustisch.

### Beispiel 4: Prüfung eines gemäß Beispiel 2 verschlossenen und unauthorisiert göffneten Poststückes.

Es wird ein Briefumschlag zunächst gemäß Beispiel 3 verschlossen. Dann wird der Briefumschlag im Bereich der Gummierung einer Wasserdampfatmosphäre ausgesetzt, bis sich die Lasche zerstörungsfrei öffnen läßt. Hiernach wird die Lasche, ggf. nach erneutem Befeuchten, wieder verschlossen. Sodann wird der Briefumschlag gemäß Beispiel 3 geöffnet und inspiziert. Es zeigt sich eine nahezu gleichmäßige Verteilung des rot leuchtenden Sicherheitadditivs und das Poststück kann als unauthorisiert geöffnet qualifiziert werden.

Dieses Ergebnis beruht darauf, dass die Öffnung in Wasserdampfatmosphäre zu einer starken Verwaschung des Sicherheitsadditivs führt und dass ein genauer Wiederverschluss mit exakt derselben Positionierung der Lasche nur sehr schwierig möglich ist. Im Ergebnis ist durch das Öffnen und Wiederverschließen das Muster irreversibel zerstört. Die unauthorisierte Person hat dies jedoch nicht bemerkt, da das Sicherheitsadditiv in sichtbarem Licht nicht erkennbar ist.

## Patentansprüche

1. Verwendung einer Schließflüssigkeit, enthaltend Wasser und ein durch unmittelbare Inaugenscheinnahme und ohne Zuhilfenahme von technischen Hilfsmitteln nicht sichtbares Sicherheitsadditiv, welches ausgewählt ist aus der Gruppe bestehend aus Lumineszenzstoffe, Peptide, Proteine und Nukleinsäuren, zum Verschließen von Poststücken, wobei eine mit einer Gummierung versehene Lasche einer das Poststück umhüllenden Poststückhülle oder ein der umgeklappten. Lasche gegenüberliegender Bereich des Poststückes mit der Schließflüssigkeit mit definierter lateral inhomogener Verteilung der schließflüssigkeit und/oder des Sicherheitsadditivs in Form eines Musters befeuchtet wird, und wobei die Lasche dann umgeklappt und an einer gegenüberliegenden Fläche der Poststückhülle angedrückt wird.

2. Verwendung nach Anspruch 1, wobei das Sicherheitsadditiv ausgewählt ist aus der Gruppe bestehend aus Nukleinsäure mit 2 bis 50 Nukleotiden.

3. Verwendung nach Anspruch 1 oder 2, wobei die Schließflüssigkeit enthält:
a) 50 bis 99,9, vorzugsweise 70 bis 99,0, insbesondere 80 bis 99,0, Gew.-% Wasser,
b) 0 bis 10,0, vorzugsweise 1,0 bis 30,0, insbesondere 1,0 bis 20, Gew.-% Penetrationsmittel,
c) 0 bis 10,0, vorzugsweise 0 bis 3,0, insbesondere 0,01 bis 1,0, Gew.-% Benetzungsmittel,
d) 0 bis 10,0, vorzugsweise 0 bis 3,0, insbesondere 0,01 bis 2,0, Gew.-% Stabilisierer und/oder Puffer,
e) 0 bis 5,0, vorzugsweise bis 2,0, insbesondere 0,01 bis 1,0, Gew.-% Farbstoffe,
f) 0 bis 5,0, vorzugsweise 0 bis 1,0, insbesondere 0,01 bis 0,1, Gew.-% Aromastoffe,
g) 0 bis 10,0, vorzugsweise 0 bis 1,0, insbesondere 0 bis 0,1 Gew.-% Biozide und/oder Fungizide und/oder sonstige üblichen Hilfsstoffe,
h) 0,0001 bis 10,0, vorzugsweise 0,0001 bis 2,0, insbesondere 0,0001 bis 0,1, Gew.-% des Sicherheitsadditivs.
wobei sich die Komponenten a) bis h) stets zu 100 Gew.-% addieren.

4. Verwendung nach einem der Ansprüche 1 bis 3, wobei das Poststück ein Brief und die Poststückhülle ein Briefumschlag ist.

5. Verwendung nach einem der Ansprüche 1 bis 4, wobei die Befeuchtung sowie das Umklappen und Andrücken der Lasche in einer Briefschließvorrichtung automatisch gesteuert erfolgt.

6. Verwendung nach Anspruch 1, wobei die Schließflüssigkeit in einer Briefschließvorrichtung mit einem Tank, enthaltend die Schließflüssigkeit, und mit einer Befeuchterschwinge, welche zur Abnahme von Schließflüssigkeit aus dem Tank und Übertragung abgenommener Schließflüssigkeit auf die Gummierung oder der Gummierung bei umgeklappter Lasche gegenüberliegenden Bereich eines in die Briefschließvorrichtung eingelegten Poststückes mit definierter lateral inhomogener Verteilung der Schließflüssigkeit und/oder des Sicherheitsadditivs in Form eines Musters eingerichtet ist, verwendet wird.

7. Verwendung nach Anspruch 1, wobei die Schließflüssigkeit in einer Frankiervorrichtung mit einer Briefschließvorrichtung nach Anspruch 6 verwendet wird.

8. Poststück mit einer Poststückhülle, welche mit einher mit einer Gummierung versehenen Lasche ausgestattet ist, welches unter Verwendung einer Schließflüssigkeit, enthaltend Wasser und ein durch unmittelbare Inaugenscheinnahme und ohne Zuhilfenahme von technischen Hilfsmitteln nicht sichtbares Sicherheitsadditiv, welches ausgewählt ist aus der Gruppe bestehend aus Lumineszenzstoffe, Peptide, Proteine und Nukleinsäuren, durch Anfeuchten der Gummierung, Umklappen der Lasche und Andrücken der Gummierung an die Poststückhülle verschlossen ist, wobei das Sicherheitsadditiv mit definierter lateral inhomogener Verteilung in Form eines Musters im Bereich der Gummierung angeordnet ist.

9. Verfahren zur Detektion einer unauthorisierten Öffnung eines Poststückes nach Anspruch 8, wobei die lateral inhomogene Verteilung des Sicherheitsadditivs in Form eines Musters delektiert und/oder angezeigt und optional automatisch mit einer lateral inhomogenen Referenzverteilung verglichen wird.

## Claims

1. Use of a sealing liquid, comprising water and a security additive being non-visible by direct inspection and without the aid of technical means, which security additive is selected from the group consisting of luminescent substances, peptides, proteins, and nucleic acids, for sealing postal items, wherein a flap provided with a gumming of a postal item envelope enclosing the postal item or a section of the postal item opposite to the folded-back flap is moistened with the sealing liquid with a defined laterally inhomogeneous distribution of the sealing liquid and/or of the security additive in the form of a pattern, and wherein the flap is then folded back and pressed on an opposite surface of the postal item envelope.

2. The use according to claim 1, wherein the security additive is selected from the group consisting of nucleic acids with 2 to 50 nucleotides.

3. The use according to claim 1 or 2, wherein the sealing liquid contains:
a) 50 to 99.9, preferably 70 to 99.0, in particular 80 to 99.0 wt.% water,
b) 0 to 10.0, preferably 1.0 to 30.0, in particular 1.0 to 20 wt.% penetration agent,
c) 0 to 10.0, preferably 0 to 3.0, in particular 0.01 to 1.0 wt.% moistening agent,
d) 0 to 10.0, preferably 0 to 3.0, in particular 0.01 to 2.0 wt.% stabilizers and/or buffers,
e) 0 to 5.0, preferably 0 to 2.0, in particular 0.01 to 1.0 wt.% dyes,
f) 0 to 5.0, preferably 0 to 1.0, in particular 0.01 to 0.1 wt.% flavorings,
g) 0 to 10.0, preferably 0 to 1.0, in particular 0 to 0.1 wt.% biocides and/or fungicides and/or other usual auxiliaries,
h) 0.0001 to 10.0, preferably 0.0001 to 2.0, in particular 0.0001 to 0.1 wt.% security additive,
wherein the sum of the components a) to h) always totals 100 wt.%.

4. The use according to one of claims 1 to 3, wherein the postal item is a letter and the postal item envelope is a letter envelope.

5. The use according to one of claims 1 to 4, wherein the moistening of the gumming and the folding-back and pressing-on of the flap is automatically controlled in a letter sealing device.

6. The use according to claim 1, wherein the sealing liquid is used in a letter sealing device with a tank containing the sealing liquid and a moistener wing, which is adapted for receiving sealing liquid from the tank and transferring received sealing liquid on the gumming or a section opposite to the gumming, when the flap is folded back, of a postal item inserted into the letter sealing device, with a defined laterally inhomogeneous distribution of the sealing liquid and/or of the security additive in the form of a pattern.

7. The use according to claim 1, wherein the sealing liquid is used in a franking device with a letter sealing device according to claim 6.

8. A postal item with a postal item envelope, which is equipped with a flap provided with a gumming, which is sealed using a sealing liquid comprising water and a security additive being non-visible by direct inspection and without the aid of technical means, which security additive is selected from the group consisting of luminescent substances, peptides, proteins, and nucleic acids, by moistening the gumming, folding-back the flap and pressing-on the gumming against the postal item envelope, wherein the security additive is disposed in the section of the gumming with a defined laterally inhomogeneous distribution in the form of a pattern.

9. A method for detecting an unauthorized opening of a postal item according to claim 8, wherein the laterally inhomogeneous distribution of the security additive in the form of a pattern is detected and/or displayed, and optionally is automatically compared to a laterally inhomogeneous reference distribution.

## Revendications

1. Utilisation d'un liquide à cacheter comprenant de l'eau et un additif de sécurité non visible directement et sans des moyens techniques, qui est choisi à partir du groupe consistant en des substances luminescentes, peptides, protéines et acides nucléiques, pour cacheter des envois postaux, dans laquelle une languette pourvue d'une gomme d'une enveloppe d'envoi postal enveloppant l'envoi postal ou une région de l'envoi postal opposée à la languette pliée vers l'arrière est humectée avec le liquide à cacheter à une distribution latéralement inhomogène définie du liquide à cacheter et/ou de l'additif de sécurité sous la forme d'un motif, et dans laquelle la languette humectée est puis pliée vers l'arrière et pressée sur une surface opposée de l'enveloppe d'envoi postal.

2. Utilisation selon la revendication 1, dans laquelle l'additif de sécurité est choisi à partir du groupe consistant en des acides nucléiques ayant 2 à 50 nucléotides.

3. Utilisation selon la revendication 1 ou 2, dans laquelle le liquide à cacheter comprend:
a) 50 à 99,9, de préférence 70 à 99,0, en particulier 80 à 99,0 % en poids d'eau,
b) 0 à 10,0, de préférence 1,0 à 30,0, en particulier 1,0 à 20 % en poids d'agent de pénétration,
c) 0 à 10,0, de préférence 0 à 3,0, en particulier 0,01 à 1,0 % en poids d'agent d'humectage,
d) 0 à 10,0, de préférence 0 à 3,0, en particulier 0,01 à 2,0 % en poids de stabilisateurs et/ou tampons,
e) 0 à 5,0, de préférence 0 à 2,0, en particulier 0,01 à 1,0 % en poids de colorants,
f) 0 à 5,0, de préférence 0 à 1,0, en particulier 0,01 à 0,1 % en poids de substances aromatisantes,
g) 0 à 10,0, de préférence 0 à 1,0, en particulier 0 à 0,1 % en poids de biocides et/ou fongicides et/ou d'autres agents auxiliaires habituels,
h) 0,0001 à 10,0, de préférence 0,0001 à 2,0, en particulier 0,0001 à 0,1 % en poids de l'additif de sécurité,
dans laquelle la somme des composants a) à h) est toujours 100 % en poids.

4. Utilisation selon une des revendications 1 à 3, dans laquelle l'envoi postal est une lettre et l'enveloppe d'envoi postal est une enveloppe de lettre.

5. Utilisation selon une des revendications 1 à 4, dans laquelle l'humectage et le pliage et pressage de la languette est commandé automatiquement dans un dispositif à cacheter les lettres.

6. Utilisation selon la revendication 1, dans laquelle le liquide à cacheter est utilisé dans un dispositif à cacheter les lettres avec un réservoir comprenant le liquide à cacheter et un bras d'humectage, qui est agencé à recevoir le liquide à cacheter à partir du réservoir et transposer le liquide à cacheter reçu sur la gomme ou une région de l'envoi postal opposée à la gomme, si la languette est pliée vers l'arrière, d'un envoi postal placé dans le dispositif à cacheter les lettres à une distribution latéralement inhomogène définie du liquide à cacheter et/ou de l'additif de sécurité sous la forme d'un motif.

7. Utilisation selon la revendication 1, dans laquelle le liquide à cacheter est utilisé dans un dispositif d'affranchissement comprenant un dispositif à cacheter les lettres selon la revendication 6.

8. Envoi postal avec une enveloppe d'envoi postal, qui comprend une languette pourvue d'une gomme, qui est fermé utilisant un liquide à cacheter comprenant de l'eau et un additif de sécurité non visible directement et sans des moyens techniques, qui est choisi à partir du groupe consistant en des substances luminescentes, peptides, protéines et acides nucléiques, par l'humectage de la gomme, pliage de la languette vers l'arrière et pressage de la gomme contre l'enveloppe d'envoi postal, l'additif de sécurité étant arrangé à une distribution latéralement inhomogène définie sous la forme d'un motif dans la région de la gomme.

9. Procédé de détection d'une ouverture non autorisée d'un envoi postal selon la revendication 8, dans lequel la distribution latéralement inhomogène de l'additif de sécurité sous la forme d'un motif est détectée et/ou affichée et optionnellement automatiquement comparée à une distribution de référence latéralement inhomogène.
